# FASCICULE DE BREVET EUROPEEN

(11) **EP 1 427 594 B1**
(45) Date de publication et mention de la délivrance du brevet: **01.04.2009**
(21) Numéro de dépôt: 02787121.9
(22) Date de dépôt: 09.07.2002
(51) Int. Cl.: B60C 9/20

(54) **PNEUMATIQUE POUR ENGIN LOURD**
REIFEN FÜR SCHWERFAHRZEUG
TYRE FOR HEAVY VEHICLE

(30) Priorité: 16.07.2001 FR 0109573
(43) Date de publication de la demande: 16.06.2004
(73) Titulaire: Société de Technologie Michelin, 63000 Clermont-Ferrand Cedex 09 (FR); Michelin Recherche et Technique S.A., 1763 Granges-Paccot (CH)
(72) Inventeur: GIRAUD, Jacques, F-63110 Beaumont (FR); PALGEN, Marie-Claude, F-63200 Lanore (FR)
(74) Mandataire: Le Cam, Stéphane Georges Elie
(86) Numéro de dépôt international: PCT/EP2002/007621
(87) Numéro de publication internationale: WO 2003/008206

(56) Documents cités:
- WO-A-00/54992
- FR-A- 1 437 569
- US-A- 5 111 864

## Description

L'invention concerne un pneumatique à armature de carcasse radiale destiné à équiper un véhicule lourd tel qu'un véhicule de transport ou un engin de « Génie Civil ». Il s'agit notamment d'un pneumatique qui présente une largeur axiale supérieure à 37 pouces.

Un tel pneumatique, destiné généralement à porter de lourdes charges, comprend une armature de carcasse radiale, et une armature de sommet composée d'au moins deux nappes de sommet de travail, formées d'éléments de renforcement inextensibles, croisés d'une nappe à la suivante et faisant avec la direction circonférentielle des angles égaux ou inégaux, et compris entre 10 et 45°.

Les armatures de sommet de pneumatiques radiaux, et plus particulièrement en ce qui concerne les pneumatiques de très grandes dimensions, sont soumises à de grandes déformations, qui engendrent entre les bords de deux nappes croisées des contraintes de cisaillement longitudinal et transversal (le cisaillement longitudinal est plus important que le transversal lorsque les câbles de nappes croisées font avec la direction circonférentielle des angles faibles), en même temps qu'une contrainte de délamination, contrainte radiale ayant tendance à séparer radialement les bords des deux nappes. Lesdites contraintes sont dues en premier lieu à la pression de gonflage du pneumatique, qui fait en sorte que la pression dite de ceinturage entre armature de carcasse et armature de sommet tend à provoquer l'expansion circonférentielle de ladite armature de sommet ; Lesdites contraintes sont en outre dues à la charge portée par le pneumatique en roulage avec naissance d'une surface de contact entre sol et pneumatique ; Lesdites contraintes sont encore dues à la mise en dérive du pneumatique en roulage. Ces contraintes génèrent des fissures dans le mélange caoutchouteux avoisinant l'extrémité de la nappe la plus courte, fissures qui se propagent dans ledit mélange et qui pénalisent l'endurance d'une armature de sommet, et donc du pneumatique.

Une amélioration nette de l'endurance a été procurée par l'emploi dans l'armature de sommet d'au moins une nappe de sommet de protection ayant une largeur axiale supérieure à la largeur de ia nappe de travail la plus large axialement.

On entend par "axiale", une direction parallèle à l'axe de rotation du pneumatique et par "radiale" une direction coupant l'axe de rotation du pneumatique et perpendiculaire à celui-ci. L'axe de rotation du pneumatique est l'axe autour duquel il tourne en utilisation normale. Le plan médian circonférentiel est un plan perpendiculaire à l'axe de rotation du pneu et qui divise le pneumatique en deux moitiés. Un plan radial est un plan qui contient l'axe de rotation du pneumatique.

Une autre solution telle que décrite dans le brevet FR 2 421 742 consiste à répartir plus favorablement les contraintes génératrices de séparation entre nappes de sommet de travail, consécutives à la mise en dérive du pneumatique, en multipliant le nombre de nappes de travail.

La multiplication des nappes de travail n'est pas sans inconvénient, notamment au centre de l'armature de sommet où le nombre de nappes influe directement sur la rigidité de flexion du sommet du pneumatique. Lorsque cette rigidité augmente, il s'ensuit que des chocs intervenant sur le sommet du pneumatique, tels que notamment le passage sur des cailloux de grandes dimensions, peuvent conduire à un endommagement irrémédiable du pneumatique, du fait de cette rigidité accrue.

La demande de brevet WO 00/54992 a encore proposé pour éviter cet inconvénient de réaliser une armature de sommet de travail constituée d'au moins trois nappes de travail continues et d'au moins une demi-nappe, de chaque côté du plan médian circonférentiel, disposée entre les bords d'au moins deux nappes de travail continues radialement adjacentes et dont la particularité est notamment de présenter un angle avec la direction circonférentielle supérieur à 25° et supérieur d'une quantité comprise entre 5° et 15° au plus grand des angles des nappes de travail continues. Les résultats obtenus avec ce type d'architecture ont été tout à fait satisfaisants pour les dimensions de pneumatiques testées.

Le document US 5,111,864 A décrit un pneumatique pour véhicule lourd comportant plusieurs nappes de travail composées d'éléments de renforcement métalliques recouvertes par une structure de protection et des bandes auxiliaires de protection coiffant les extrémités des nappes de travail, les éléments de renforcement desdites nappes faisant un angle avec la direction circonférentielle compris entre 25 et 50° et présentant la même direction que celle des éléments de renforcement de la nappe de travail supportant lesdites bandes.

Dans leurs études et notamment durant l'étude de la réalisation de pneumatiques de dimensions plus importantes, notamment dont la largeur axiale est supérieure à 50 pouces, les inventeurs se sont donnés pour mission de définir une architecture de sommet de pneumatiques pour des engins lourds permettant d'obtenir une endurance satisfaisante notamment en améliorant les rigidités circonférentielles et transversale afin de limiter les contraintes de cisaillement et en conservant une souplesse du sommet.

Ce but a été atteint selon l'invention par un pneumatique pour engin lourd selon la revendication 1.

Un pneumatique tel qu'il vient d'être défini selon l'invention, c'est-à-dire possédant une armature de sommet telle que décrite permet d'améliorer l'endurance des pneumatiques pour véhicule lourd. Il s'avère en effet que les architectures proposées réduisent les contraintes de cisaillement tout en conservant la souplesse du pneumatique, particulièrement à son sommet, permettant d'obtenir une bonne résistance aux chocs, ce qui favorise encore l'endurance du pneumatique.

Les nappes continues et les demi-nappes de travail sont de préférence composées d'éléments de renforcement métalliques inextensibles, de manière à assurer le plus efficacement possible la fonction de frettage de la nappe carcasse.

Selon une réalisation avantageuse de l'invention, au moins une des demi-nappes présente une zone de recouvrement avec l'extrémité de la nappe de sommet continue la moins large. Selon une telle réalisation, il est possible d'améliorer encore la répartition des efforts dans l'ensemble de l'armature sommet en optimisant les couplages entre nappes.

Avantageusement encore, les éléments de renforcement d'une des demi-nappes ont un angle supérieur d'au moins 10° au plus petit des angles α, α'. Une telle nappe permet notamment de contribuer à la rigidité transversale du pneumatique sans nuire à la flexibilité.

Selon une réalisation préférée de l'invention, pour améliorer la rigidité circonférentielle du pneumatique tout en augmentant la rigidité transversale, les éléments de renforcement des demi-nappes sont croisés.

De façon connue en soi, notamment pour améliorer la résistance du pneumatique aux coupures et perforations, l'armature de sommet de travail est complétée par une armature de protection. Celle-ci est avantageusement composée d'au moins deux nappes d'éléments de renforcement métalliques élastiques. Des variantes de réalisation de l'invention prévoient des nappes de protection constituées de bandelettes se recouvrant partiellement. Quel que soit le type de nappes de protection utilisé, les renforts élastiques utilisés peuvent être des éléments disposés de manière rectiligne ou sous forme sinusoïdale.

Au moins l'une desdites nappes de protection, préférentiellement la nappe radialement intérieure a une largeur axiale plus grande que la plus grande largeur axiale des nappes de travail continues. Avantageusement encore, ladite nappe de protection recouvre l'ensemble des nappes de travail continues et des demi-nappes de travail.

Selon une variante avantageuse de l'invention, la nappe de protection radialement extérieure présente une extrémité axialement extérieure comprise entre l'extrémité axialement extérieure de la demi-nappe s'étendant axialement le moins vers l'extérieur et l'extrémité axialement extérieure de la nappe de travail continue la plus large.

De préférence encore, les éléments de renforcement des nappes de protection sont croisés entre eux.

D'autres détails et caractéristiques avantageux de l'invention ressortiront ci-après de la description d'exemples de réalisation de l'invention en référence aux figures 1 à 4 qui représentent :
- figure 1, un schéma vu en coupe radiale d'un pneumatique de Génie Civil,
- figure 2, une représentation schématique vue en coupe radiale d'une première architecture de sommet selon l'invention,
- figure 3, une représentation schématique vue en coupe radiale d'une seconde architecture de sommet selon l'invention,
- figure 4, une représentation schématique vue en coupe radiale d'une troisième architecture de sommet selon l'invention.

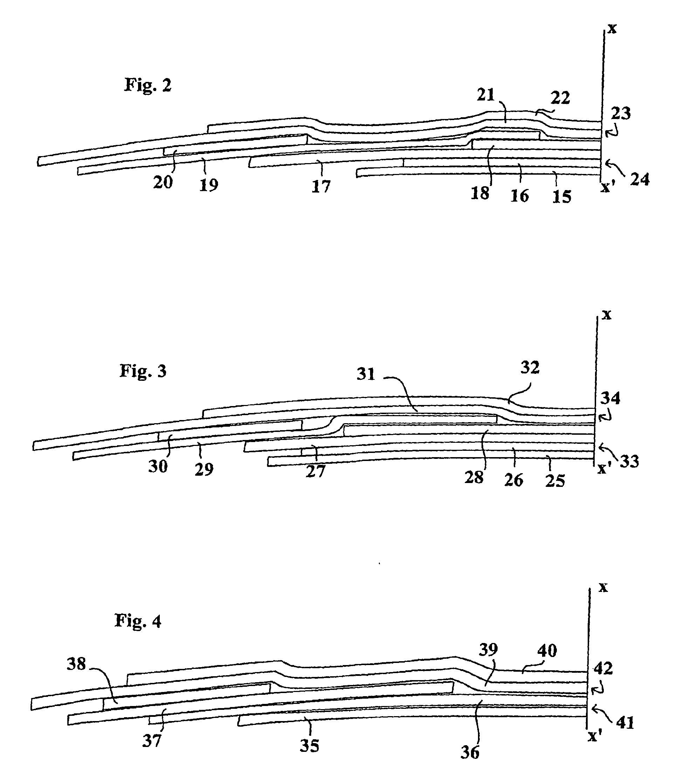

Les figures ne sont pas représentées à l'échelle pour en simplifier la compréhension. Les figures 2 à 4 ne représentent que la moitié des architectures qui se prolongent de manière symétrique par rapport à l'axe XX' qui représente le plan médian circonférentiel d'un pneumatique.

Les valeurs dimensionnelles qui sont données sont des valeurs théoriques, c'est-à-dire qu'il s'agit des valeurs de consigne lors de la fabrication des pneumatiques ; les valeurs réelles peuvent être légèrement différentes notamment du fait de l'incertitude liée au procédé de fabrication pour ce type de pneumatiques.

En outre, concernant les angles des renforts des nappes, les valeurs données sont les valeurs minimales c'est-à-dire les valeurs correspondant à la zone d'une nappe la plus proche de l'axe médian du pneumatique. En effet, l'angle desdits renforts varie selon la direction axiale du pneumatique notamment du fait du galbe de celui-ci.

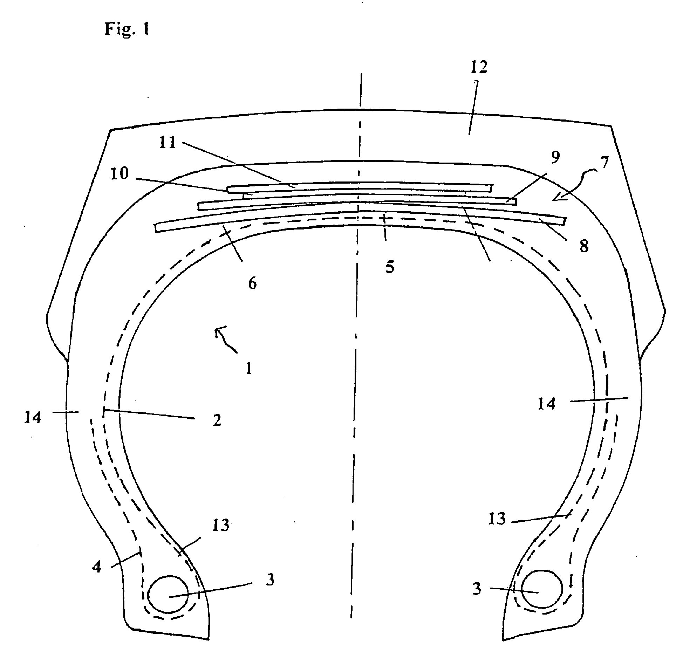

Sur la figure 1, est représentée de manière schématique une coupe radiale d'un pneumatique 1 habituellement utilisé pour des engins de Génie Civil.

Ce pneumatique 1 est un pneumatique de grande dimension dont le rapport de forme H/S est 0,80, H étant la hauteur du pneumatique sur jante et S la largeur axiale maximale du pneumatique, lorsque ce dernier est monté sur sa jante de service et gonflé à sa pression recommandée.

Ce pneumatique 1 comprend une armature de carcasse 2 composée d'une nappe de câbles métalliques inextensibles en acier, ancrée dans chaque bourrelet à une tringle 3 pour former un retournement 4 dont l'extrémité est sensiblement située au niveau de la plus grande largeur axiale de l'armature de carcasse 2. L'armature de carcasse 2 est surmontée radialement de couches 5 et de profilés de mélange caoutchouteux 6, puis d'une armature de sommet 7. Ladite armature de sommet 7 est habituellement constituée, dans le cas de la figure 1, d'une part de deux nappes 8, 9 dites de travail et d'autre part de deux nappes de protection 10, 11. Les nappes de travail 8, 9 sont elles-mêmes constituées de câbles inextensibles en acier, parallèles entre eux dans chaque nappe 8, 9, et croisés d'une nappe à la suivante en faisant avec la direction circonférenielle des angles pouvant être compris entre 15° et 45°. Les nappes de protection 10, 11 sont généralement constituées de câbles métalliques en acier élastiques, parallèles entre eux dans chaque nappe 10, 11 et croisés entre eux d'une nappe 10 à la suivante 11 en faisant également des angles pouvant être compris entre 15 et 45°. Les câbles de la nappe de travail radialement extérieure 9 sont usuellement croisés avec les câbles de la nappe de protection 10 radialement intérieure. L'armature de sommet est enfin surmontée d'une bande de roulement 12 qui est réunie aux deux bourrelets 13 par les deux flancs 14.

Sur la figure 2, on a représenté de manière schématique en coupe radiale un empilement, selon l'invention, de nappes 15 à 22 constituant une armature de sommet de travail 24 d'un pneumatique surmontée d'une armature de protection 23. L'armature de carcasse et les différentes zones de mélange caoutchouteux ne sont pas représentées sur cette figure 2 et les suivantes pour simplifier la compréhension de l'invention.

L'armature de travail 24 comprend ainsi en premier lieu les quatre nappes axialement continues 15, 16, 17 et 18. Ces nappes présentent des largeurs théoriques respectives L₁₅, L₁₆, L₁₇, L₁₈ égales à 0,40S₀, 0,35S₀, 0,65S₀, 0,25S₀, S₀ étant la largeur maximale axiale de l'armature de carcasse, lorsque ce dernier est monté sur sa jante de service et gonflé à sa pression recommandée.

Ces quatre nappes continues de travail sont formées de câbles métalliques inextensibles parallèles entre eux dans chaque nappe 15 à 18 et croisés d'une nappe 15, 17 à la suivante 16, 18 en faisant avec la direction circonférentielle du pneumatique des angles théoriques minimums α₁₅, α₁₆, α₁₇ et α₁₈, respectivement égaux à +15°, -22°, +22°, -22°.

L'armature de sommet de travail est ensuite complétée radialement par une superposition de deux demi-nappes 19, 20. Ces deux demi-nappes se retrouvent, comme expliqué précédemment, de manière symétrique par rapport au plan médian circonférentiel sur la partie non représentée de l'empilement du pneumatique. Ces deux demi-nappes comportent également des câbles métalliques inextensibles parallèles entre eux et croisés de la nappe 19 à la nappe 20 avec des angles théoriques minimums β₁₉, β₂₀ respectivement égaux à-22° et +34°.

La distance axiale théorique qui sépare le plan radial de l'extrémité intérieure de la demi-nappe 19, la moins éloignée dudit plan médian circonférentiel, est égale à 0,07S₀.

Les deux demi-nappes 19, 20 s'étendent axialement plus à l'extérieure que la nappe continue de travail 17 la plus large axialement des nappes de travail continues.

Par ailleurs, selon cette réalisation de la figure 2, la demi-nappe 19, qui est la seule à être directement au contact de nappes de travail continues 17, 18, comporte des câbles qui sont croisés avec ceux de la nappe 17 avec laquelle ladite demi-nappe 19 présente le plus grand recouvrement.

Les zones de recouvrement entre les demi-nappes et les nappes de travail continues, y compris celle entre la demi-nappe 19 et la nappe continue de travail 18 la moins étendue axialement, sont suffisamment importantes pour assurer une continuité des efforts.

Selon d'autres caractéristiques de l'invention, la demi-nappe 19 la plus étendue axialement vers l'extérieur est au contact de la nappe continue de travail 17 la plus étendue axialement. En outre, les deux demi-nappes 19, 20 recouvrent l'extrémité axialement extérieure de ladite nappe continue de travail 17 la plus étendue axialement.

L'armature de protection 23, qui couvre radialement l'armature de sommet de travail 24, est formée de deux nappes 21, 22 comprenant des câbles en acier élastiques. Sont dits élastiques des câbles présentant sous une force de traction égale à la charge de rupture un allongement relatif au moins égal à 4%, alors que des câbles sont dits inextensibles lorsque leur allongement relatif, mesuré pour 10% de la force de rupture, est inférieur à 0,2%. Les câbles desdites deux nappes sont croisés d'une nappe 21 à l'autre 22 en faisant avec la direction circonférentielle des angles théoriques minimums respectivement égaux à -24° et +24°. Les câbles de la nappe de protection 21 la plus proche radialement de l'armature de travail sont croisés avec les câbles de la demi-nappe de travail 20 la plus éloignée radialement de l'armature de carcasse ; l'invention prévoit selon d'autres variantes de réalisation d'inverser l'ordre radial des deux nappes de protection, les câbles desdites nappes demeurant croisés entres eux.

La largeur axiale de la nappe de protection 21 la plus large est telle qu'elle recouvre la largeur axiale de l'armature de travail 24 ; c'est-à-dire qu'elle couvre radialement selon son étendue axiale l'ensemble des nappes de travail. En d'autres termes, l'extrémité de la nappe de protection 21 la plus large est axialement à l'extérieur de la demi-nappe 19.

L'extrémité axialement extérieure de la nappe de protection 22 la moins large est comprise entre l'extrémité axialement extérieure de la demi-nappe 20 s'étendant axialement le moins vers l'extérieur et l'extrémité de la nappe de travail continue 17 la plus large.

La figure 3 illustre une représentation schématique vue en coupe radiale d'une autre architecture d'armature de sommet selon l'invention. Selon cette seconde illustration de l'invention, l'empilement comporte des nappes 25 à 32 constituant une armature de sommet de travail 33 d'un pneumatique surmontée d'une armature de protection 34.

L'armature de travail 33 comprend les quatre nappes axialement continues 25, 26, 27 et 28. Ces nappes présentent des largeurs théoriques respectives L₂₅, L₂₆, L₂₇, L₂₈ égales à 0,50S₀, 0,45S₀, 0,55S₀, 0,40S₀, S₀ étant comme énoncé précédemment la largeur maximale axiale de l'armature de carcasse, lorsque ce dernier est monté sur sa jante de service et gonflé à sa pression recommandée.

Ces quatre nappes continues de travail sont formées de câbles métalliques inextensibles parallèles entre eux dans chaque nappe 25 à 28 et croisés d'une nappe 25, 27 à la suivante 26, 28 en faisant avec la direction circonférentielle du pneumatique des angles théoriques minimums α₂₅, α₂₆, α₂₇ et α₂₈, respectivement égaux à +18°, -24°, +20°,-20°.

L'armature de sommet de travail 33 est ensuite complétée radialement par une superposition de deux demi-nappes 29, 30. Ces deux demi-nappes se retrouvent comme précédemment de manière symétrique par rapport au plan médian circonférentiel sur la partie non représentée de l'empilement du pneumatique. Ces deux demi-nappes comportent également des câbles métalliques inextensibles parallèles entre eux et croisés de la nappe 29 à la nappe 30 avec des angles théoriques minimums β_{29,} β₃₀ respectivement égaux à -23° et +34°.

La distance axiale théorique qui sépare le plan radial de l'extrémité intérieur de la demi-nappe 29, la moins éloignée dudit plan médian circonférentiel, est égale à 0,10S₀.

L'armature de protection 34, qui couvre radialement l'armature de sommet de travail 33 est identique à celle de la figure 2 et est constituée des nappes 31, 32.

En comparaison de la figure 2, l'architecture de la figure 3 propose des nappes de travail continues plus larges tout au moins en ce qui concerne les nappes 25, 26, 28. Cette différence d'architecture a notamment pour effet d'augmenter les surfaces de couplages entre les nappes de travail continues et les demi-nappes de travail. Cette augmentation des surfaces de couplage entre les nappes permet de conférer au pneumatique une plus grande résistance aux efforts de dérives.

Cette architecture propose encore un frettage plus important en zone centrale en comparaison du cas de la figure 2.

En outre, l'architecture représentée sur la figure 3, permet d'augmenter la souplesse du sommet au centre, la demi-nappe 29 étant plus éloignée du plan médian circonférentiel que ne l'est la demi-nappe 19 sur la figure 2.

La figure 4 illustre une représentation schématique vue en coupe radiale d'une troisième architecture sommet selon l'invention. Selon cette troisième illustration de l'invention, l'empilement comporte des nappes 35 à 40 constituant une armature de sommet de travail 41 d'un pneumatique surmontée d'une armature de protection 42.

L'armature de travail 41 comprend deux nappes axialement continues 35 et 36. Ces nappes présentent des largeurs théoriques respectives L₃₅ et L₃₆ égales à 0,45S₀, 0,65S₀, S₀ étant, comme énoncé précédemment la largeur maximale axiale de l'armature de carcasse, lorsque ce dernier est monté sur sa jante de service et gonflé à sa pression recommandé.

Ces deux nappes continues de travail sont formées de câblés métalliques inextensibles parallèles entre eux dans chaque nappe 35 et 36 et croisés d'une nappe 35 à la suivante 36 en faisant avec la direction circonférentielle du pneumatique des angles théoriques minimums α₃₅ et α₃₆ respectivement égaux à -15°,+24°.

L'armature de sommet de travail 41 est ensuite complétée radialement par une superposition de deux demi-nappes 37, 38. Ces deux demi-nappes se retrouvent comme précédemment de manière asymétrique par rapport au plan médian circonférentiel sur là partie non représentée de l'empilement du pneumatique. Ces deux demi-nappes comportent également des câbles métalliques inextensibles parallèles entre eux et croisés de la nappe 37 à la nappe 38 avec des angles théoriques minimums β₃₇, β₃₈ respectivement égaux à-18° et + 34°.

La distance axiale théorique qui sépare le plan radial de l'extrémité intérieur de la demi-nappe 37, la moins éloignée dudit plan médian circonférentiel, est égale à 0,08S₀.

L'armature de protection 42, qui couvre radialement l'armature de sommet de travail 41 est identique à celle des deux exemples précédents et est constituée des nappes 39, 40.

La différence essentielle par rapport aux deux exemples précédent est que l'architecture de sommet ne présente que deux nappes de travail continues. Cette réalisation permet de conserver une souplesse au centre du sommet du pneumatique plus importante que dans les cas précédents.

L'interprétation de ces exemples ne doit pas se faire de façon limitative, les variantes de réalisation étant nombreuses ; il est notamment possible de prévoir d'intercaler des demi-nappes de travail entre des nappes de travail continues. Il est encore possible d'avoir trois nappes de travail continues. Il est également envisageable d'inverser l'orientation des câbles des nappes de protection.

## Revendications

1. Pneumatique (1) pour engin lourd, comprenant une armature de carcasse radiale (2) surmontée radialement d'une armature de sommet de travail (7, 24, 33, 41), composée d'au moins deux nappes continues de sommet de travail (15, 16, 17, 18 ; 25, 26, 27, 28 ; 35, 36) formées d'éléments de renforcement métalliques croisés d'une nappe à la suivante en faisant avec la direction circonférentielle des angles (α, α') compris entre 10 et 35°, l'armature de sommet de travail étant complétée de chaque côté du plan médian circonférentiel par au moins deux demi-nappes (19, 20 ; 29, 30 ; 37, 38) dont les éléments de renforcement métalliques font avec la direction circonférentielle des angles (β, β') supérieurs au plus petit des angles (α, α'), la demi-nappe s'étendant axialement le plus vers l'extérieur (19, 29, 37) étant au contact de la nappe continue de sommet de travail axialement la plus large (17, 27, 36), les deux demi-nappes (19, 20 ; 29, 30 ; 37, 38) recouvrant, radialement, l'extrémité axialement extérieure de ladite nappe de travail axialement la plus large (17, 27, 36), **caractérisé en ce que** les nappes continues et les demi-nappes de travail sont composées d'éléments de renforcement métalliques inextensibles tels que leur allongement relatif, mesuré pour 10% de la force de rupture, est inférieur à 0,2%.

2. Pneumatique selon la revendication 1, **caractérisé en ce qu'**au moins une des demi-nappes présente une zone de recouvrement avec l'extrémité de la nappe de sommet la moins large (18, 28, 35).

3. Pneumatique selon la revendication 1 ou 2, **caractérisé en ce que** les éléments de renforcement d'une des demi-nappes ont un angle supérieur d'au moins 10° au plus petit des angles (α, α').

4. Pneumatique selon l'une de revendications 1 à 3, **caractérisé en ce que** les éléments de renforcement des demi-nappes sont croisés.

5. Pneumatique selon l'une des revendications 1 à 4, **caractérisé en ce que** l'armature de sommet de travail est complétée par une armature de protection (23, 34, 42) composée d'au moins deux nappes (21, 22 ; 31, 32 ; 39,40) d'éléments de renforcement métallique élastiques.

6. Pneumatique selon la revendication 5 **caractérisé en ce qu'**une nappe de protection (21, 31, 39) présente une largeur axiale supérieure à la largeur de la nappe de travail la plus large axialement.

7. Pneumatique selon la revendication 5 ou 6 **caractérisé en ce que** la nappe de protection radialement extérieure (22, 32, 40) présente une extrémité axialement extérieure comprise entre l'extrémité axialement extérieure de la demi-nappe (20, 30, 38) s'étendant axialement le moins vers l'extérieur et l'extrémité axialement extérieure de la nappe de travail continue la plus large (17, 27,36).

## Claims

1. A tyre (1) for a heavy vehicle, comprising a radial carcass reinforcement (2) radially surmounted by a working crown reinforcement (7, 24, 33, 41), composed of at least two continuous working crown plies (15, 16, 17, 18; 25, 26, 27, 28; 35, 36) formed by metal reinforcing elements which cross from one ply to the next, forming angles (α, α') of between 10° and 35° with the circumferential direction, the working crown reinforcement being completed on each side of the circumferential centre plane by at least two half-plies (19, 20; 29, 30; 37, 38) whereof the metal reinforcing elements form angles (β, β') greater than the smallest of the angles (α, α') with the circumferential direction, that half-ply extending axially furthest outwards (19, 29, 37) being in contact with the axially widest continuous working crown ply (17, 27, 36), the two half-plies (19, 20; 29, 30; 37, 38) radially covering the axially outer end of the said axially widest working ply (17, 27, 36), **characterised in that** the continuous plies and the working half-plies are composed of metal reinforcing elements which are non-extensible such that their relative elongation, measured at 10% of the breaking force, is less than 0.2%.

2. A tyre according to Claim 1, **characterised in that** at least one of the half-plies has a zone covering the end of the narrowest crown ply (18, 28,35),

3. A tyre according to Claim 1 or 2, **characterised in that** the reinforcing elements of one of the half-plies are at an angle at least 10° greater than the smallest of the angles (α, α').

4. A tyre according to one of Claims 1 to 3, **characterised in that** the reinforcing elements of the half-plies cross one another.

5. A tyre according to one of Claims 1 to 4, **characterised in that** the working crown reinforcement is completed by a protective reinforcement (23, 34, 42) composed of at least two plies (21, 22; 31, 32; 39, 40) of resilient metal reinforcing elements.

6. A tyre according to Claim 5, **characterised in that** a protective ply (21, 31, 39) has an axial width greater than the width of the axially widest working ply.

7. A tyre according to Claim 5 or 6, **characterised in that** the radially outer protective ply (22, 32, 40) has an axially outer end between the axially outer end of the half-ply (20, 30, 38) extending axially least far outwards and the axially outer end of the widest continuous working ply (17, 27, 36).

## Patentansprüche

1. Luftreifen (1) für Schwerlastfahrzeuge, der eine radiale Karkassenbewehrung (2) aufweist, über der sich in radialer Richtung eine Funktionsscheitelbewehrung (7, 24, 33, 41) befindet, die sich aus mindestens zwei kontinuierlichen Funktionsscheitellagen (15, 16, 17, 18; 25, 26, 27, 28; 35, 36) zusammensetzt, die aus metallischen Verstärkungselementen gebildet werden, die von einer Lage zur nächsten gekreuzt sind, wobei sie mit der Umfangsrichtung Winkel (α, α') von 10 bis 35° bilden, wobei die Funktionsscheitellage auf jeder Seite der in Umfangsrichtung liegenden Mittelebene durch mindestens zwei Halblagen (19, 20; 29, 30; 37, 38) vervollständigt wird, deren metallische Verstärkungselemente mit der Umfangsrichtung Winkel (β, β') bilden, die größer sind als der kleinste der Winkel (α, α'), wobei die Halblage, die sich in axialer Richtung am weitesten nach außen erstreckt (19, 29, 37) mit der kontinuierlichen Funktionsscheitellage in Kontakt ist, die die axial breiteste ist (17,27,36), wobei die beiden Halblagen (19, 20; 29, 30; 37, 38) in radialer Richtung das axial äußere Ende der axial breitesten Funktionslage (17, 27, 36) bedecken, **dadurch gekennzeichnet, dass** die kontinuierlichen Funktionslagen und die Funktionshalblagen aus nichtdehnbaren metallischen Verstärkungselementen gebildet sind, die so sind, dass ihre bei 10 % der Reißkraft gemessene relative Dehnung unter 0,2 % liegt.

2. Luftreifen nach Anspruch 1, **dadurch gekennzeichnet, dass** mindestens eine der Halblagen einen Überlappungsbereich mit dem Ende der am wenigsten breiten Scheitellage (18, 28, 35) aufweist.

3. Luftreifen nach Anspruch 1 oder 2, **dadurch gekennzeichnet, dass** die Verstärkungselemente einer der Halblagen einen Winkel haben, der mindestens 10° größer ist als der kleinste der Winkel (α, α').

4. Luftreifen nach einem der Ansprüche 1 bis 3, **dadurch gekennzeichnet, dass** die Verstärkungselemente der Halblagen gekreuzt sind.

5. Luftreifen nach einem der Ansprüche 1 bis 4, **dadurch gekennzeichnet, dass** die Funktionsscheitelbewehrung durch eine Schutzbewehrung (23, 34, 42) vervollständigt wird, die aus mindestens zwei Lagen (21, 22; 31, 32; 39, 40) von elastischen metallischen Verstärkungselementen gebildet wird.

6. Luftreifen nach Anspruch 5, **dadurch gekennzeichnet, dass** eine Schutzlage (21, 31, 39) eine axiale Breite aufweist, die größer ist als die Breite der axial breitesten Funktionslage.

7. Luftreifen nach Anspruch 5 oder 6, **dadurch gekennzeichnet, dass** die radial äußere Schutzlage (22, 32, 40) ein axial äußeres Ende aufweist, das zwischen dem axial äußeren Ende der Halblage (20, 30, 38), die sich axial am wenigsten weit nach außen erstreckt, und dem axial äußeren Ende der breitesten kontinuierlichen Funktionslage (17, 27, 36) liegt.
